# EUROPÄISCHE PATENTSCHRIFT

(11) **EP 1 759 256 B1**
(45) Veröffentlichungstag und Bekanntmachung des Hinweises auf die Patenterteilung: **17.12.2008**
(21) Anmeldenummer: 05752826.7
(22) Anmeldetag: 02.06.2005
(51) Int. Cl.: G05D 16/20, F16K 1/44, F16F 9/46

(54) **ELEKTRISCH ANSTEUERBARES VENTIL**
ELECTRICALLY CONTROLLABLE VALVE
SOUPAPE A COMMANDE ELECTRIQUE

(30) Priorität: 08.06.2004 DE 102004027785; 29.03.2005 DE 102005014101
(43) Veröffentlichungstag der Anmeldung: 07.03.2007
(73) Patentinhaber: Continental Teves AG & Co. oHG, 60488 Frankfurt (DE)
(72) Erfinder: FEIGEL, Hans-Jörg, 61191 Rosbach (DE)
(86) Internationale Anmeldenummer: PCT/EP2005/052516
(87) Internationale Veröffentlichungsnummer: WO 2005/121918

(56) Entgegenhaltungen:
- WO-A-98/48332
- DE-A1- 3 412 351
- DE-A1- 4 231 239
- DE-A1- 4 426 152
- DE-A1- 4 427 905
- DE-A1- 19 711 289

## Beschreibung

Die Erfindung betrifft ein elektrisch ansteuerbares Ventil, insbesondere für die Verwendung in einem Stossdämpfer, nach dem Oberbegriff des Patentanspruchs 1.

Aus der DE 44 27 905 A1 ist bereits ein elektrisch ansteuerbares Ventil bekannt, mit einem Stellantrieb, einem vom Stellantrieb betätigbaren ersten Ventilkörper, der mit einem Ventilsitz (Steuerkante) im Ventilgehäuse zusammenwirkt, um einen ersten Ventilöffnungsquerschnitt variabel einstellen zu können.

Die Aufgabe der Erfindung ist es, ein Ventil der angegebenen Art mit möglichst geringem Aufwand derart zu gestalten, dass unter Verwendung einfacher, funktionssicherer Mittel eine Druckregel- als auch Druckbegrenzungsfunktion zustande kommt.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung gehen aus der nachfolgenden Beschreibung eines Ausführungsbeispiels für ein Ventil in verschiedenen Betriebsstellungen hervor.

Es zeigen:
- Fig. 1: einen Längsschnitt durch ein Ventil mit den der Erfindung zugrunde liegenden Merkmalen in einer ersten Druckregelstellung, in welcher der Erreger- strom dem maximalen elektrischen Ansteuerstrom der Ventilspule entspricht, wodurch der gewünschte Fluidstrom unter hohem Fluiddruck das Ventil durchströmt,
- Figur 2: das Ventil nach Figur 1 in einer zweiten Druckre- gelstellung, in welcher der Erregerstrom dem mini- malen elektrischen Ansteuerstrom entspricht, wo- durch der Fluidstrom unter geringem Fluiddruck das Ventil durchströmt,
- Figur 3: das Ventil nach Figur 1 in einer ersten Fail-Safe- Stellung, in welcher das Ventil elektrisch nicht angesteuert bzw. nicht ansteuerbar ist (Erreger- strom I=0), wobei zur Druckregelung eine Blenden- öffnung aufweisender (zweiter) Ventilöffnungsquer- schnitt freigegeben ist,
- Figur 4: das Ventil nach Figur 1 in einer zweiten Fail- Safe-Stellung, in welcher das Ventil elektrisch nicht angesteuert bzw. nicht ansteuerbar ist (Er- regerstrom I=0), wobei bis zur Druckbegrenzung auf ein gewünschtes, fest eingestelltes Druckniveau erste, zweite und dritte Ventilöffnungsquerschnit- te freigegeben sind.

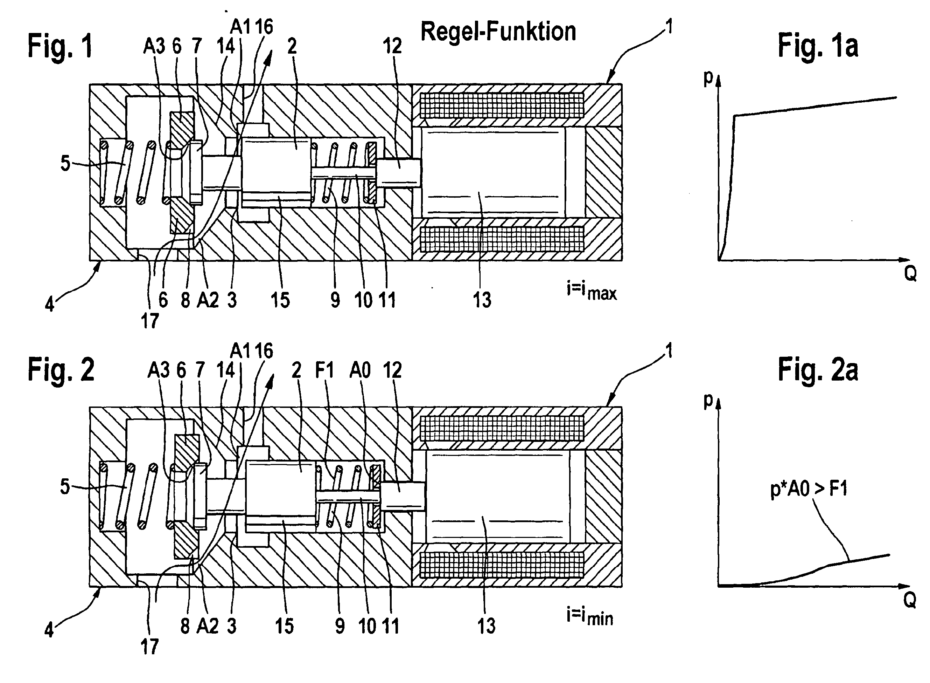

Exemplarisch für alle Abbildungen soll anhand der Figur 1 zunächst der prinzipielle Aufbau des Ventils beschrieben werden.

Es zeigt die Fig. 1 im Längsschnitt ein elektrisch betätigbares Ventil, das vorzugsweise zur Regelung eines Stossdämpfers in einem Kraftfahrzeug verwendet wird. Das Ventil besteht aus einem elektrischen Stellantrieb 1, einem vom Stellantrieb 1 direkt betätigbaren ersten Ventilkörper 2, der mit einer Steuerkante 3 im Ventilgehäuse 4 zusammenwirkt. Durch das Zusammenwirken des ersten Ventilkörpers 2 mit der Steuerkante 3 ergibt sich mittels des Stellantriebs 1 ein variabel einstellbarer erster Ventilöffnungsquerschnitt A1, durch den ein geregelter Fluidstrom (sog. Primärstrom) in Richtung des im Bereich des Ventilkörpers 2 gelegenen Ventilauslasskanals 16 gelangt.

Ferner ist vor dem ersten Ventilöffnungsquerschnitt A1 ein zweiter Ventilöffnungsquerschnitt A2 zwischen dem kegelförmig erweiterten Innenabschnitt des Ventilgehäuses 4 und einem ringscheibenförmigen zweiten Ventilkörper 6 vorgesehen, der vom Stellantrieb 1 über einen am ersten Ventilkörper 2 angebrachten stößelförmigen Fortsatz 7 zu betätigen ist, dessen Außendurchmesser dem Außendurchmesser des ersten Ventilkörpers 2 entspricht. Der veränderbare zweite Ventilöffnungsquerschnitt A2 befindet sich somit stromaufwärts zum ersten Ventilöffnungsquerschnitt A1 in einer Reihenschaltung zum ersten Ventilöffnungsquerschnitt A1, wobei beide Ventilöffnungsquerschnitte A1, A2 mittels des ersten Ventilkörpers 2 reziprok proportional zueinander zu öffnen und zu verschließen sind.

Weiterhin ist im zweiten Ventilkörper 6 ein von der Stirnfläche des Fortsatzes 7 normalerweise verschlossener dritter Ventilquerschnitt A3 vorgesehen. Zum Verschluss des zweiten Ventilöffnungsquerschnitts A2 ist der zweite Ventilkörper 6 als ringscheibenförmiger Sitzventilkörper ausgeführt, der an einer Gehäusestufe 14 (Kegelstufe des Ventilgehäuses 4) anlegbar ist. Ein Ventileinlasskanal 17 mündet stromaufwärts zum zweiten Ventilkörper 6 in das Ventilgehäuse 4 ein.

Der erste Ventilkörper 2 ist im Bereich des ersten Ventilöffnungsquerschnitts A1 bevorzugt als im Ventilgehäuse 4 geführter Ventilkolben ausgeführt, der im elektrisch stromlosen Zustand des Stellantriebs 1 mittels einer auf den zweiten Ventilkörper 6 einwirkenden Rückstellfeder 5 immer von der Steuerkante 3 abgehoben ist, sodass der erste Ventilöffnungsquerschnitt A1 zumindest teilweise geöffnet ist. Hierdurch besteht gleichzeitig eine hydraulische Verbindung zwischen dem Ventilauslass- und Ventileinlasskanal 16, 17 über die Blendenöffnung 8 am zweiten Ventilkörper 6.

Die Rückstellfeder 5 ist zwischen dem zweiten Ventilkörper 6 und dem Ventilgehäuse 4 angeordnet, sodass im nicht erregten Zustand des Stellantriebs 1 der zweite Ventilkörper 6 immer an der Gehäusestufe 14 (Kegelstufe des Ventilgehäuses 4) dichtend verharrt und ausschließlich die in vorliegendem Ausführungsbeispiel als Umfangskerbe ausgeführte Blendenöffnung 8 des zweiten Ventilkörpers 6 freigegeben ist, so dass im nicht erregten Zustand des Stellantriebs 1 ein geringfügiger Durchlass im Bereich des dritten Ventilöffnungsquerschnitts A3 vorhanden ist, um die vom Querschnitt der Blendenöffnung 8 abhängig hydraulische Verbindung zwischen dem Ventileinlass- und Auslasskanal 17, 16 zu gewährleisten.

Ferner befindet sich zwischen dem ersten Ventilkörper 2 und einem zwischen dem Stellantrieb 1 und dem Ventilkörper 2 angeordneten Federanschlag 11 eine Druckfeder 9, die dem Hydraulikdruck im Ventileinlasskanal 17 und der Rückstellfeder 5 nur schwach entgegen wirkt. Zur Aufnahme und Führung der Druckfeder 9 und des scheibenförmigen Federanschlags 11 weist der erste Ventilkörper 2 auf seiner vom Fortsatz 7 abgewandten Stirnseite einen Betätigungsstift 10 auf. Unter der permanenten Wirkung der Druckfeder 9 stützt sich der Federanschlag 11 entweder an der Innenwand des Ventilgehäuses 4 oder an einer Anschlagschulter eines mit dem Betätigungsstifts 10 verbundenen Druckstücks 12 ab. Das Druckstück 12 ist innerhalb des Ventilgehäuses 4 gedichtet und ragt mit seiner vom Federanschlag 11 abgewandten Stirnfläche in einer bevorzugten Ausführungsform in den elektromagnetischen Stellantrieb 1, der aus einem das Druckstück 12 betätigenden Magnetanker 13 besteht.

Selbstverständlich kann bei Wunsch oder Bedarf der erste Ventilkörper 2 anstelle eines Schieberventils auch als Sitzventil ausgeführt sein. Durch die Ausführung des ersten Ventilkörpers 2 als im Ventilgehäuse 4 geführter Tauchkolben, befindet sich bevorzugt am Außenumfang des Tauchkolbens eine Druckverteilernut 15, über die das Fluid zum Druckausgleich in den Raum des Ventilgehäuses 4 gelangt, in dem sich die Druckfeder 9 befindet. Die Abdichtung dieses Raums in Richtung des Stellantriebs erfolgt im einfachsten Fall durch das metallisch dichtende Druckstück 12, das zwangsläufig auch vom Fluiddruck beaufschlagt ist.

Nachfolgend soll nunmehr beispielhaft anhand den Fig. 1-4 die unterschiedlichen Ventilstellungen nebst dem zugehörigen Druckverläufen aufgezeigt werden.

Die Figur 1 zeigt das Ventil mit den der Erfindung zugrunde liegenden Merkmalen in einer ersten Druckregelstellung, in welcher der Erregerstrom dem maximalen elektrischen Ansteuerstrom der am Ventilgehäuse 4 angebrachten Ventilspule entspricht, wodurch der eingeregelte Fluidstrom unter hohem Fluiddruck das Ventil monodirektional durchströmen kann. Infolge des maximalen Erregerstroms imax verschiebt der Magnetanker 13 nämlich die aus dem Druckstück 12, dem Federanschlag 11, der Druckfeder 9, dem ersten und zweiten Ventilkolben 2, 6 und dem Fortsatz 7 bestehende Baugruppe entgegen der Wirkung der Rückstellfeder 5 nach links, wodurch sich der zweite Ventilkolben 6 von der Gehäusestufe 14 entfernt, während sich der erste Ventilkolben 2 der Steuerkante 3 zur Druckregelung nähert.

Die Fig. 1a zeigt die Druckregelkennlinie für die in Fig. 1 abgebildete Druckregelfunktion. Hierzu ist in Fig. 1a auf der Ordinate des Diagramms der Druckanstieg p sowie entlang der Abszisse der Volumenstrom Q aufgetragen, wonach infolge des hohen Erregerstroms imax der gewünschte hohe Volumenstrom Q des Fluids durch einen steilen Druckanstieg p des Hydraulikdrucks charakterisiert ist.

Die Figur 2 zeigt abweichend von Figur 1 das Ventil in einer Regelstellung, in welcher der Erregerstrom dem minimalen elektrischen Ansteuerstrom der Ventilspule 12 entspricht. Infolge des minimalen Erregerstroms imin verschiebt der Magnetanker 13 die aus dem Druckstück 12, dem Federanschlag 11, der Druckfeder 9, dem ersten und zweiten Ventilkolben 2 und dem Fortsatz 7 bestehende Baugruppe entgegen der Wirkung der Rückstellfeder 5 nur geringfügig nach links, wodurch sich der zweite Ventilkolben 6 nur geringfügig von der Gehäusestufe 14 entfernt, während sich zur Druckregelung der erste Ventilkolben 2 der Steuerkante 3 um den zurückgelegten Wegbetrag des zweiten Ventilkolbens 6 nähert. In dieser Druckregelstellung kommt somit die im Diagramm nach Fig. 2a abgebildete Druckregelkennlinie zustande, woraus ein flacher Druckanstieg mit zunehmendem Volumenstrom Q zu entnehmen ist.

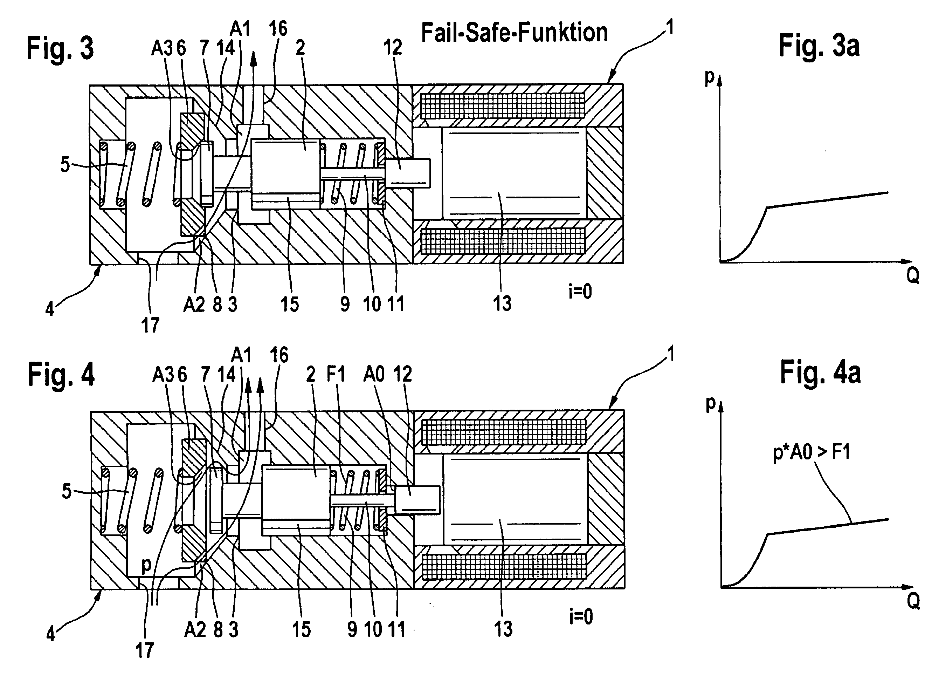

Die Figur 3 zeigt das Ventil in einer ersten Fail-Safe-Stellung, in welcher das Ventil elektrisch nicht angesteuert bzw. nicht ansteuerbar ist (Erregerstrom i=0) und in welcher der zweite Ventilöffnungsquerschnitt A2 quasi bis auf die Leckage über die Blendenöffnung 8 versperrt ist. Der Magnetanker 13 verharrt hierbei in seiner vom Druckstück 12 entfernten Stellung, wodurch infolge der Wirkung der Rückstellfeder 5 der zweite Ventilkörper 6 an der den Ventilsitz bildende Gehäusestufe 14 anliegt. Da sich auf der von der Rückstellfeder 5 abgewandten Stirnseite des zweiten Ventilkörpers 6 der erste Ventilkörper 2 abstützt, entfernt sich zwangsläufig der erste Ventilkörper 2 von der Steuerkante 3 um das Maß, welches dem Schließweg des zweiten Ventilkörpers 6 entspricht. Folglich gelangt ein geringer Fluidstrom ausschließlich über die Blendenöffnung 8 zum geöffneten ersten Ventilöffnungsquerschnitt A1, woraus der in Fig. 3a ersichtliche, für die Blendenwirkung charakteristische Kennlinienverlauf resultiert.

Die Figur 4 zeigt ausgehend von der Darstellung nach Figur 3 das Ventil in einer sogenannten zweiten Fail-Safe-Stellung, die sich von der in Fig.3 gezeigten ersten Fail-Safe-Stellung dahingehend unterscheidet, dass der auf die Stirnfläche des Fortsatzes 7 wirkende hydraulische Eingangsdruck den Fortsatz 7 von seiner Sitzfläche am zweiten Ventilkörper 6 abhebt, wodurch zwischen dem Fortsatz 7 und dem zweiten Ventilkörper 6 der dritte Ventilöffnungsquerschnitt A3 freigegeben ist, über den ein sekundärer Fluidstrom parallel zu dem über die Blendenöffnung 8 gedrosselt einströmenden primären Fluidstrom zum ersten Ventilöffnungsquerschnitt A1 und von dort zum Ventilauslasskanal 16 gelangt. Unter Kompression der Druckfeder 9 befindet sich in dieser Ventilstellung das Druckstück 12 kurz vor dem Magnetanker 13. Die Kraft F1 der Druckfeder 9 ist demnach kleiner bemessen als die aus dem Hydraulikdruck p und der Stirnfläche A0 am Druckstück 12 resultierende Hydraulikkraft.

Entsprechend dem Diagramm nach Fig. 4a stellt sich eine im wesentlichen durch die konstruktive Auslegung des ersten Ventilkolbens 2 und der Druckfeder 9 festgelegte Druckbegrenzungsfunktion ein, in welcher der sekundäre Fluidstrom den zweiten Ventilkolben 6 über dessen offenen dritten Ventilöffnungsquerschnitt A3 parallel zum Primärstrom über die Blendenöffnung 8 passiert. Infolge der hydraulischen Verschiebung des Fortsatzes 7 in Richtung auf die Gehäusestufe 14 gelangt das Fluid über den zweiten Ventilöffnungsquerschnitt A2 gedrosselt zum ersten ungedrosselten Ventilöffnungsquerschnitt A1, dem der Ventilauslasskanal 16 nachgeordnet ist.

Die beiden Ventilkörper 2, 6 sind zweckmäßigerweise derart gestaltet, dass sich die bei der Durchströmung entstehenden Strömungskräfte weitgehend kompensieren.

### Bezugszeichenliste

- 1: Stellantrieb
- 2: Erster Ventilkörper
- 3: Steuerkante
- 4: Ventilgehäuse
- 5: Rückstellfeder
- 6: Zweiter Ventilkörper
- 7: Fortsatz
- 8: Blendenöffnung
- 9: Druckfeder
- 10: Betätigungsstift
- 11: Federanschlag
- 12: Druckstück
- 13: Magnetanker
- 14: Gehäusestufe
- 15: Druckverteilernut
- 16: Ventilauslasskanal
- 17: Ventileinlasskanal
- A1: Erster Ventilöffnungsquerschnitt
- A2: Zweiter Ventilöffnungsquerschnitt
- A3: Dritter Ventilöffnungsquerschnitt

## Patentansprüche

1. Elektrisch ansteuerbares Ventil, mit einem Stellantrieb (1), einem vom Stellantrieb (1) betätigbaren ersten Ventilkörper (2), der mit einem Ventilsitz im Ventilgehäuse (4) zusammenwirkt, um einen ersten Ventilöffnungsquerschnitt (A1) variabel einstellen zu können, sowie mit einem Ventileinlass- und Ventilauslasskanal (17, 16), **dadurch gekennzeichnet, dass** im Ventilgehäuse (4) ein vom ersten Ventilkörper (2) betätigbarer zweiter Ventilkörper (6) angeordnet ist, um einen in Reihe zum ersten Ventilöffnungsquerschnitt (A1) angeordneten zweiten Ventilöffnungsquerschnitt (A2) variabel einstellen zu können, dass beide Ventilöffnungsquerschnitte (A1, A2) mittels des ersten Ventilkörpers (2) reziprok proportional zueinander zu öffnen und zu verschließen sind und in dem Fluidströmungsweg vom Ventileinlasskanal (17) zum Ventilauslasskanal (18) angeordnet sind, wobei zur Umgehung des zweiten Ventilöffnungsquerschnitts (A2) und zur Begrenzung des hydraulischen Drucks auf einen mechanisch voreingestellten Wert ein mittels des ersten Ventilkörpers (2) freigebbarer dritter Ventiltiffnungsquerschnitt (A3) in Reihenanordnung zum ersten Ventilöffnungsquerschnitt (A1) vorgesehen ist.

2. Ventil nach Anspruch 1, **dadurch gekennzeichnet, dass** der dritte Ventilöffnungsquerschnitt (A3) zwischen dem zweiten Ventilkörper (6) und einem am ersten Ventilkörper (2) stößelförmig ausgebildeten Fortsatz (7) angeordnet ist, wobei der dritte Ventilöffnungsquerschnitt (A3) außerhalb der Druckbegrenzungsfunktion durch das Anlegen des Fortsatzes (7) am Ventilkörper (6) verschlossen ist.

3. Ventil nach Anspruch 1 oder 2, **dadurch gekennzeichnet, dass** der zweite Ventilkörper (6) in seiner Ruhestellung, in welcher der zweite Ventilöffnungsquerschnitt (A2) verschlossen ist, vorzugsweise unter der Wirkung einer Rückstellfeder (5) an einer Gehäusestufe (14) im Ventilgehäuse (4) verharrt.

4. Ventil nach Anspruch 3, **dadurch gekennzeichnet, dass** der zweite Ventilöffnungsquerschnitt (A2) als ein vom Hub des zweiten Ventilkörpers (6) abhängiger variabler Ringquerschnitt ausgeführt ist, der zwischen der Gehäusestufe (14) und dem ringscheibenförmigen zweiten Ventilkörper (6) angeordnet ist.

5. Ventil nach einem der vorangegangenen Ansprüche, **dadurch gekennzeichnet, dass** mittels einer Reihenschaltung des ersten mit dem zweiten Ventilkörpers (2, 6) der zweite Ventilöffnungsquerschnitt (A2) reziprok proportional zum ersten Ventilöffnungsquerschnitt (A1) variabel zu öffnen oder zu verschließen ist.

6. Ventil nach einem der vorangegangenen Ansprüche, **dadurch gekennzeichnet, dass** der zweite Ventilkörper (6) mit einer Blendenöffnung (8) versehen ist, die vorzugsweise im Bereich des zweiten Ventilöffnungsquerschnitts (A2) angeordnet ist.

7. Ventil nach einem der vorangegangenen Ansprüche, **dadurch gekennzeichnet, dass** der erste Ventilkörper (2) als im Ventilgehäuse (4) geführter Ventilkolben ausgeführt ist, an dessen vom zweiten Ventilkörper (6) abgewandten Stirnfläche ein Betätigungsstift (10) mit einem kolbenförmigen Druckstück (12) angebracht ist, das in Richtung auf den Stellantrieb (1) flüssigkeitsdicht aus dem Ventilgehäuse (4) hervorsteht.

8. Ventil nach Anspruch 7, **dadurch gekennzeichnet, dass** zur Grundpositionierung des ersten Ventilkörpers (2) im Ventilgehäuse (4) zwischen dem Druckstück (12) und dem ersten Ventilkörper (2) eine Druckfeder (9) angeordnet ist, die sich an einem Federanschlag (11) abstützt, der zur Ausführung der mechanisch voreingestellten Druckbegrenzungsfunktion zwischen dem Druckstück (12) und dem ersten Ventilkörper (2) relativ verschiebbar auf dem Betätigungsstift (10) angeordnet ist.

9. Ventil nach Anspruch 8, **dadurch gekennzeichnet, dass** die Druckfeder (9) eine gegenüber der Rückstellfeder (5) geringere Federsteifigkeit aufweist.

## Claims

1. Electrically controllable valve, having an actuating drive (1), having a first valve body (2) which can be actuated by the actuating drive (1) and which interacts with a valve seat in the valve housing (4) in order to be able to variably adjust a first valve opening cross section (A1), and having a valve inlet and valve outlet duct (17, 16), **characterized in that** a second valve body (6) which can be actuated by the first valve body (2) is arranged in the valve housing (4) in order to be able to variably adjust a second valve opening cross section (A2) which is arranged in series with respect to the first valve opening cross section (A1), **in that** the two valve opening cross sections (A1, A2) are opened and closed in a reciprocally proportional fashion to one another by means of the first valve body (2) and are arranged in the fluid flow path from the valve inlet duct (17) to the valve outlet duct (18), with a third valve opening cross section (A3), which can be opened by means of the first valve body (2), being provided in a series arrangement with respect to the first valve opening cross section (A1), in order to bypass the second valve opening cross section (A2) and to limit the hydraulic pressure to a mechanically preset value.

2. Valve according to Claim 1, **characterized in that** the third valve opening cross section (A3) is arranged between the second valve body (6) and a plunger-like projection (7) which is formed on the first valve body (2), wherein outside the pressure limiting function, the third valve opening cross section (A3) is closed off by the contact of the projection (7) against the valve body (6).

3. Valve according to Claim 1 or 2, **characterized in that** the second valve body (6) pauses in its rest position, in which the second valve opening cross section (A2) is closed off, preferably under the action of a restoring spring (5) on a housing step (14) in the valve housing (4).

4. Valve according to Claim 3, **characterized in that** the second valve opening cross section (A2) is designed as an annular cross section which is variable as a function of the stroke of the second valve body (6) and which is arranged between the housing step (14) and the annular-disc-shaped second valve body (6).

5. Valve according to one of the preceding claims, **characterized in that** the second valve opening cross section (A2) is variably opened and closed in a reciprocally proportional fashion to the first valve opening cross section (A1) by means of a series connection of the first valve body (2) to the second valve body (6).

6. Valve according to one of the preceding claims, **characterized in that** the second valve body (6) is provided with an orifice opening (8) which is preferably arranged in the region of the second valve opening cross section (A2).

7. Valve according to one of the preceding claims, **characterized in that** the first valve body (2) is designed as a valve piston which is guided in the valve housing (4) and whose end surface which faces away from the second valve body (6) has attached to it an actuating pin (10) with a piston-shaped thrust piece (12) which projects out of the valve housing (4), in a liquid-tight fashion, in the direction of the actuating drive (1).

8. Valve according to Claim 7, **characterized in that,** for the basic positioning of the first valve body (2) in the valve housing (4), a pressure spring (9) is arranged between the thrust piece (12) and the first valve body (2), which pressure spring (9) is supported against a spring stop (11) which is arranged, so as to perform the mechanically preset pressure limiting function, on the actuating pin (10) so as to be relatively movable between the thrust piece (12) and the first valve body (2).

9. Valve according to Claim 8, **characterized in that** the pressure spring (9) has a lower spring stiffness than the restoring spring (5).

## Revendications

1. Soupape à commande électrique, dotée
- d'un entraînement de réglage (1),
- d'un premier corps de soupape (2) actionné par l'entraînement de réglage (1) et coopérant avec un siège de soupape disposé dans le boîtier de soupape (4) de manière à pouvoir ajuster de manière variable la section transversale (A1) d'une première ouverture de la soupape et
- d'un canal d'entrée et d'un canal de sortie de soupape (17, 16),
**caractérisée en ce que**
- un deuxième corps de soupape (6) actionné par le premier corps de soupape (2) est disposé dans le boîtier de soupape (4) de manière à pouvoir ajuster de manière variable la section transversale d'ouverture (A2) d'une deuxième soupape disposée en série par rapport à la section transversale d'ouverture (A1) de la première soupape,
- **en ce que** les deux sections transversales d'ouverture (A1, A2) de soupape peuvent être ouvertes et fermées proportionnellement l'une à l'autre et réciproquement au moyen du premier corps de soupape (2) et sont disposées dans le parcours d'écoulement du fluide entre le canal d'entrée (17) de la soupape et le canal de sortie (18) de la soupape,
- **en ce qu'**une troisième section transversale d'ouverture (A3) de soupape qui peut être libérée au moyen du premier corps de soupape (2) est prévue en série par rapport à la première section transversale d'ouverture (A1) de soupape pour contourner la deuxième section transversale d'ouverture (A2) de soupape et limiter la pression hydraulique à une valeur pré-réglée mécaniquement.

2. Soupape selon la revendication 1, **caractérisée en ce que** la troisième section transversale d'ouverture (A3) de soupape est disposée entre le deuxième corps de soupape (6) et un prolongement (7) en forme de poussoir formé sur le premier corps de soupape (2), tandis que hors de la fonction de limitation de pression, la troisième section transversale d'ouverture (A3) de soupape est fermée par application du prolongement (7) sur le corps de soupape (6).

3. Soupape selon les revendications 1 ou 2, **caractérisée en ce que** dans sa position de repos dans laquelle la deuxième section transversale d'ouverture (A2) de soupape est fermée, le deuxième corps de soupape (6) est bloqué contre un épaulement (14) du boîtier de soupape (4), de préférence sous l'effet d'un ressort de rappel (5).

4. Soupape selon la revendication 3, **caractérisée en ce que** la deuxième section transversale d'ouverture (A2) de soupape est réalisée sous la forme d'une section transversale annulaire variable qui dépend de la course du deuxième corps de soupape (6) et qui est disposée entre l'épaulement (14) du boîtier et le deuxième corps de soupape (6) en forme de plaque annulaire.

5. Soupape selon l'une des revendications précédentes, **caractérisée en ce que** la deuxième section transversale d'ouverture (A2) de soupape peut être ouverte ou fermée de manière variable, proportionnellement et réciproquement par rapport à la première section transversale d'ouverture (A1) de soupape, au moyen d'un raccordement en série du premier et du deuxième corps de soupape (2, 6).

6. Soupape selon l'une des revendications précédentes, **caractérisée en ce que** le deuxième corps de soupape (6) est doté d'une ouverture d'écran (8) qui est disposée de préférence dans la zone occupée par la deuxième section transversale d'ouverture (A2) de soupape.

7. Soupape selon l'une des revendications précédentes, **caractérisée en ce que** le premier corps de soupape (2) est réalisé sous la forme d'un piston de soupape guidé dans le boîtier de soupape (4), une tige d'actionnement (10) dotée d'une pièce de poussée (12) en forme de piston étant installée sur sa surface frontale non tournée vers le deuxième corps de soupape (6) et débordant de manière étanche aux liquides du boîtier de soupape (4) en direction de l'entraînement de réglage (1).

8. Soupape selon la revendication 7, **caractérisée en ce que** pour placer le premier corps de soupape (2) dans sa position de base dans le boîtier de soupape (4), un ressort de poussée (9) est disposé entre la pièce de poussée (12) et le premier corps de soupape (2) et s'appuie sur une butée élastique (11) qui est disposée à coulissement sur la tige d'actionnement (10) pour exécuter la fonction de limitation de pression pré-réglée mécaniquement entre la pièce de poussée (12) et le premier corps de soupape (2).

9. Soupape selon la revendication 8, **caractérisée en ce que** la raideur élastique du ressort de poussée (9) est inférieure à celle du ressort de rappel (5).
